# FASCICULE DE BREVET EUROPEEN

(11) **EP 3 500 489 B1**
(45) Date de publication et mention de la délivrance du brevet: **15.12.2021**
(21) Numéro de dépôt: 17751779.4
(22) Date de dépôt: 17.08.2017
(51) Int. Cl.: B64D 11/06

(54) **ARRANGEMENT DE SIÈGES, NOTAMMENT D'UN AVION**
SITZANORDNUNG, INSBESONDERE FÜR EIN FLUGZEUG
SEAT ARRANGEMENT, IN PARTICULAR FOR AN AIRPLANE

(30) Priorité: 17.08.2016 FR 1657802; 15.05.2017 FR 1770491
(43) Date de publication de la demande: 26.06.2019
(73) Titulaire: Safran Seats, 36100 Issoudun (FR)
(72) Inventeur: HERAULT, Patrick, 18160 Saint-Hilaire-En-Liginieres (FR); BONNEFOY, Bastien, 36100 Issoudin (FR); GLAIN, Arthur, Huntington Beach, CA 92649 (US); FREIENMUTH, Eric, Marysville, WA 98270 (US)
(74) Mandataire: Marconnet, Sébastien
(86) Numéro de dépôt international: PCT/EP2017/070854
(87) Numéro de publication internationale: WO 2018/033599

(56) Documents cités:
- EP-A1- 1 720 766
- WO-A1-2014/115107
- WO-A1-2014/155353
- US-A1- 2007 262 625
- US-A1- 2013 241 247

## Description

La présente invention porte sur un agencement de sièges, en particulier de sièges pour passagers d'un véhicule de transport, notamment d'un avion. L'invention vise à proposer un tel agencement de sièges qui assure à la fois le confort et la sécurité des passagers, tout en prévoyant de préserver leur intimité. L'invention trouve ainsi une application particulièrement avantageuse avec les sièges d'avion.

Les sièges d'avion de type "Classe Affaires" offrent aux passagers différentes positions de confort, d'une position « assise » jusqu'à une position « couchette », dans laquelle le siège définit un plan de couchage sensiblement horizontal pour que le passager puisse s'allonger.

Des positions intermédiaires de confort sont aussi proposées, telles que la position « relax » dans laquelle le dossier est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions.

Le document WO2014155353A1 divulgue un arrangement de sièges comprenant un système de fermeture.

La couchette est généralement constituée notamment du dossier, de l'assise, d'un repose-jambes et d'un repose-pieds, ces derniers pouvant être fixes ou liés à la cinématique du siège.

Certains agencements de sièges pour cabine d'avion de type "Classe Affaires" permettent un accès direct à un couloir de circulation pour tous les passagers, via un passage disposé entre deux sièges agencés l'un derrière l'autre selon un axe longitudinal de la cabine de l'avion. Les passagers peuvent ainsi sortir de leur siège facilement notamment lorsque le siège est en position « couchette ».

De ce fait, lorsqu'un passager ou un personnel de bord marche dans un couloir de circulation situé latéralement par rapport au siège, notamment en direction de l'arrière de la cabine de l'avion, il est susceptible d'être en contact visuel direct avec un passager assis dans un siège. Une telle situation peut apporter un sentiment d'inconfort pour le passager assis, en ce sens qu'il ressent une absence d'intimité.

L'invention vise notamment à remédier efficacement à cet inconvénient en proposant un arrangement de sièges, notamment destiné à être installé dans une cabine d'avion, définie dans la revendication indépendante 1.

L'invention permet ainsi de définir un espace intérieur clos autour du siège procurant un sentiment d'intimité au passager en lui évitant d'être à la vue directe des autres passagers et/ou personnels de bord marchant dans le couloir de circulation.

Selon une réalisation, le siège est tourné vers un couloir de circulation de la cabine d'avion.

Selon une réalisation, les moyens de fermeture comportent au moins une paroi coulissante, notamment rigide ou flexible.

Selon l'invention, les moyens de fermeture comportent une première paroi apte à coulisser suivant une première direction de déploiement entre
- une position « rangée », et
- une position « déployée », dans laquelle la première paroi obture au moins une partie du passage transversal entre l'unité de siège « avant » et l'unité de siège « arrière ».

Selon l'invention, les moyens de fermeture comportent une deuxième paroi apte à coulisser suivant une deuxième direction de déploiement entre
- une position « rangée », et
- une position « déployée », dans laquelle la deuxième paroi obture au moins une partie du passage transversal entre l'unité de siège « avant » et l'unité de siège « arrière ».

Selon l'invention, la deuxième direction de déploiement de la deuxième paroi est opposée à la première direction de déploiement de la première paroi.

Selon l'invention, l'unité de siège est équipée d'une première paroi et d'une deuxième paroi montées mobiles par rapport à l'unité de siège.

Selon l'invention, la première paroi et la deuxième paroi sont situées de part et d'autre d'une paroi intermédiaire, notamment constituée par une portion d'une coque fixe de l'unité de siège.

Selon une réalisation, la première paroi est solidaire d'au moins une glissière coopérant avec un rail fixé sur la paroi intermédiaire et/ou en ce que la deuxième paroi est solidaire d'au moins une glissière coopérant avec un rail fixé sur la paroi intermédiaire.

Selon l'invention, la paroi intermédiaire présente une forme ondulée définissant des creux, deux creux successifs étant ouverts suivant deux directions opposées, des rails d'une des parois parmi la première ou la deuxième parois étant logés dans des creux ouverts en direction du siège et des rails de l'autre des parois parmi la première et la deuxième paroi étant logés dans des creux ouverts dans une direction opposée au siège.

Selon une réalisation, un cache s'étend au-dessus d'au moins un rail correspondant afin d'éviter des risques de pincement de doigts lors d'une manipulation de la première paroi ou de la deuxième paroi.

Selon une réalisation, une partie inférieure de la première paroi et/ou de la deuxième paroi est logée dans un meuble latéral de l'unité de siège correspondante respectivement lorsque la première paroi et/ou la deuxième paroi est dans la position rangée.

Selon une réalisation, la première paroi et la deuxième paroi sont mobiles suivant un mouvement de translation ou de rotation, ou un mouvement combiné comportant au moins une translation et au moins une rotation. Selon une réalisation, les moyens de fermeture comportent au moins un rideau occultant.

Selon une réalisation, le rideau est monté sur un support articulé mobile entre
- une position « rangée », dans laquelle le rideau est situé à l'intérieur de l'unité de siège « avant », notamment à l'intérieur de la coque fixe de l'unité de siège « avant », et
- une position « déployée », dans laquelle le rideau obture au moins une partie du passage transversal.

Selon une réalisation, le support est mobile en translation et/ou en rotation par rapport à l'unité de siège « avant » pour passer de la position « rangée » à la position « déployée ».

Selon une réalisation, le rideau est monté sur un cadre coulissant entre
- une position « rangée », dans laquelle le rideau est situé à l'intérieur de l'unité de siège « avant », notamment à l'intérieur de la coque fixe de l'unité de siège « avant », et
- une position « déployée », dans laquelle le rideau obture au moins une partie du passage transversal.

Selon une réalisation, les moyens de fermeture comportent un premier rideau et/ou un deuxième rideau, notamment enroulables et en particulier implantés dans l'unité de siège « avant », le premier rideau permettant, lorsqu'il est déroulé, d'obturer au moins une partie du passage transversal, notamment une partie inférieure du passage transversal, et/ou le deuxième rideau permettant d'obturer, lorsqu'il est déroulé, au moins une partie du passage transversal, notamment une partie supérieure du passage transversal.

Selon une réalisation, les moyens de fermeture comportent au moins deux parois mobiles l'une par rapport à l'autre selon au moins un degré de liberté et susceptibles d'être déployées selon une même direction de déploiement ou selon deux directions distinctes.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1 est une vue schématique de dessus d'une cabine d'un avion intégrant un arrangement de sièges selon la présente invention;
- La figure 2 est une vue en perspective de face d'une unité de siège comportant des moyens de fermeture selon la présente invention;
- Les figures 3a à 3c sont des vues en perspective de côté illustrant les moyens de fermeture selon la présente invention dans diverses phases de déploiement;
- La figure 4 est une vue en perspective partielle de l'unité de siège selon la présente invention illustrant un déplacement des deux parois des moyens de fermeture dans deux directions opposées;
- La figure 5 est une vue en coupe partielle illustrant une liaison mécanique entre des parois des moyens de fermeture et une paroi intermédiaire fixe de l'unité de siège selon la présente invention;
- La figure 6 est une vue en perspective arrière de l'unité de siège selon la présente invention avec les moyens de fermeture déployés;
- Les figures 7a à 7c sont des vues en perspective de face de la cabine d'avion illustrant le déploiement des moyens de fermeture selon la présente invention;
- La figure 8 est une vue en perspective de côté d'une variante de réalisation des moyens de fermeture aptes à se loger, en position rangée, dans un meuble latéral de l'unité de siège selon la présente invention;
- La figure 9 est une vue en perspective de côté d'une autre variante de réalisation des moyens de fermeture obturant uniquement une partie supérieure d'un passage de l'unité de siège selon la présente invention;
- Les figures 10 et 11a à 11b, sont des vues en perspective de côté d'un deuxième mode de réalisation des moyens de fermeture à paroi unique selon la présente invention;
- La figure 12 est une vue en perspective de côté d'un troisième mode de réalisation des moyens de fermeture à rideaux occultants selon la présente invention;
- La figure 13 est une vue de côté d'un quatrième mode de réalisation des moyens de fermeture à rideaux occultants selon la présente invention;
- La figure 14 est une vue de côté d'un cinquième mode de réalisation des moyens de fermeture à rideaux occultants selon la présente invention;
- Les figures 15a et 15b sont des vues en perspective de côté illustrant un sixième mode de réalisation des moyens de fermeture selon la présente invention comportant deux parois solidaires et mobiles l'une par rapport à l'autre selon une même direction de déploiement; et
- Les figures 16a à 16c sont des vues en perspective de côté illustrant un septième mode de réalisation des moyens de fermeture selon la présente invention comportant deux parois solidaires et mobiles l'une par rapport à l'autre selon deux directions de déploiement distinctes.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

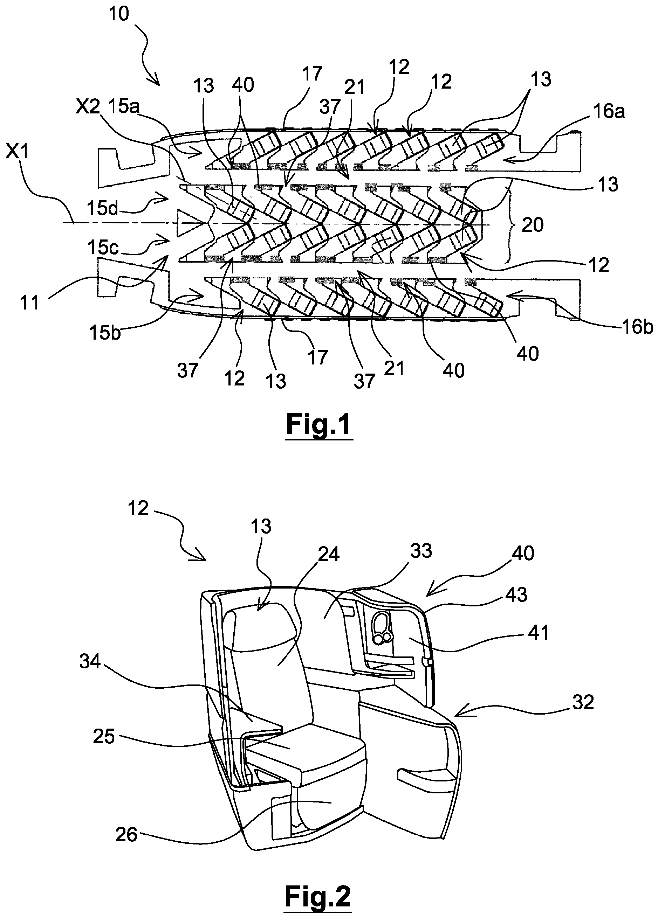

La figure 1 montre une cabine d'avion 10 s'étendant selon un axe longitudinal X1 comportant un arrangement de sièges 11. L'arrangement de sièges 11 selon la présente invention comprend une pluralité d'unités de sièges 12 comportant respectivement un siège individuel 13. Avantageusement, le siège 13 est apte à passer d'une position « assise », correspondant à la position utilisée notamment lors des phases d'arrêt, de décollage, et d'atterrissage de l'avion, et une position « couchette », dans laquelle le siège 13 définit un plan de couchage sensiblement horizontal pour le passager. En particulier, la position « assise » et la position « couchette » constituent des configurations du siège 13 dans des deux positions extrêmes. Selon des variantes de réalisation, le siège 13 pourra également prendre des positions intermédiaire, dites positions relax, entre ces deux positions extrêmes.

La pluralité d'unités de sièges 12 sont idéalement disposées selon au moins une rangée 15a s'étendant préférentiellement selon l'axe longitudinal X1 de la cabine d'avion 10. Selon l'exemple présenté sur la figure 1, la pluralité d'unités de sièges 12 sont idéalement disposées selon quatre rangées 15a, 15b, 15c et 15d.

Selon divers modes de réalisation particuliers, à l'intérieur de la rangée 15a, respectivement les rangées 15a, 15b, 15c et 15d, l'unité de sièges 12 peut être orientée de telle façon que le siège 13 soit tourné vers l'avant et/ou vers l'arrière de l'avion.

Il est à noter que, dans la suite de la description, les termes « avant » et « arrière » employés en relation avec l'expression 'unité de siège' définissent localement une position relative du siège 13 à l'intérieur de la rangée 15a, respectivement les rangées 15a, 15b, 15c et 15d, et ne se réfèrent aucunement à une orientation du siège 13 à l'intérieur de la cabine d'avion 10. En d'autres termes, l'expression 'unité de siège « avant »' signifie que l'unité de siège est positionnée directement devant une autre unité de siège à l'intérieur de la rangée, tandis que l'expression 'unité de siège « arrière »' signifie que l'unité de siège est positionnée directement derrière une autre unité de siège à l'intérieur de la rangée.

Selon l'exemple de réalisation présenté, l'arrangement de sièges 11 comporte deux groupes latéraux 16a, 16b comportant des unités de sièges 12. Les deux groupes latéraux 16a, 16b sont constitués respectivement par deux rangées 15a, 15b d'unités de sièges 12 positionnées le long d'une paroi latérale 17 du fuselage de la cabine d'avion 10. L'arrangement de sièges 11 comporte également un groupe central 20. Le groupe central 20 est préférentiellement constitué de deux rangées 15c, 15d d'unités de sièges 12. Dans un tel agencement, les deux rangées 15c, 15d d'unités de sièges 12 sont particulièrement accolées latéralement l'une par rapport à l'autre.

Les groupes latéraux 16a, 16b sont respectivement séparés du groupe central 20 par un couloir de circulation 21. Selon la configuration présenté en figure 1, deux couloirs de circulation 21 sont donc prévus dans la cabine d'avion 10, spécifiquement entre chaque groupe latéral 16a, 16b et le groupe central 20. En variante, les deux groupes latéraux 16a, 16b pourront être formés chacun par plusieurs rangées d'unités de sièges 12.

Chaque siège 13 présente un axe d'extension X2 correspondant sensiblement à une direction d'extension longitudinale du siège 13. En particulier, l'axe d'extension X2 correspond à la direction d'extension longitudinale du siège 13 en position « couchette ». Avantageusement, l'axe d'extension X2 forme un angle non nul avec à l'axe longitudinal X1 de la cabine d'avion 10.

Selon un agencement particulier, chaque siège 13 est tourné vers le couloir de circulation 21 adjacent à la rangée 15a, respectivement les rangées 15a, 15b, 15c et 15d. Ainsi agencé, chaque passager a un accès direct au couloir de circulation 21 depuis le siège 13. De plus, l'accès direct au couloir de circulation 21 est facilité par le fait que les pieds du passager se situent du côté du couloir de circulation 21.

De plus, dans le groupe central 20, idéalement, deux unités de sièges 12 sont disposées latéralement contigües l'une par rapport à l'autre. Avantageusement, les deux unités de sièges 12 ont des sièges 13 s'étendent suivant deux directions distinctes. Préférentiellement, les axes d'extension X2 respectifs des deux unités de sièges 12 forment un angle aigu. Une telle configuration est telle que les deux unités de sièges 12 forment un « V ». En particulier, une pointe de la forme en « V » des deux unités de sièges 12 est située derrière des dossiers 24 respectifs des deux unités de sièges 12.

L'optimisation de la densité de cabine d'avion 10 par rapport à une largeur de cette dernière est notamment possible en modifiant l'angle de l'axe d'extension X2 des sièges 13 par rapport à l'axe longitudinal X1 de la cabine d'avion 10.

Selon divers modes de réalisation, les axes d'extension X2 des sièges 13 peuvent former sensiblement le même angle par rapport à l'axe longitudinal X1 de la cabine d'avion 10. De plus, les axes d'extension X2 de deux sièges 13 adjacents du groupe central 20 peuvent couper l'axe longitudinal X1 de la cabine d'avion 10 sensiblement en un même point. Enfin, alternativement, les deux sièges 13 latéralement adjacents peuvent être décalés l'un par rapport à l'autre selon l'axe longitudinal X1, de sorte que les axes d'extension X2 des deux sièges 13 latéralement adjacents coupent l'axe longitudinal X1 en des points différents.

Dans l'exemple représenté, les sièges 13 sont orientés vers l'avant de la cabine d'avion 10, c'est-à-dire en direction d'une zone comportant un cockpit de l'avion. Dans un mode de réalisation alternatif, les sièges 13 sont orientés vers l'arrière de la cabine d'avion 10, c'est-à-dire en direction d'une zone opposée du cockpit de l'avion.

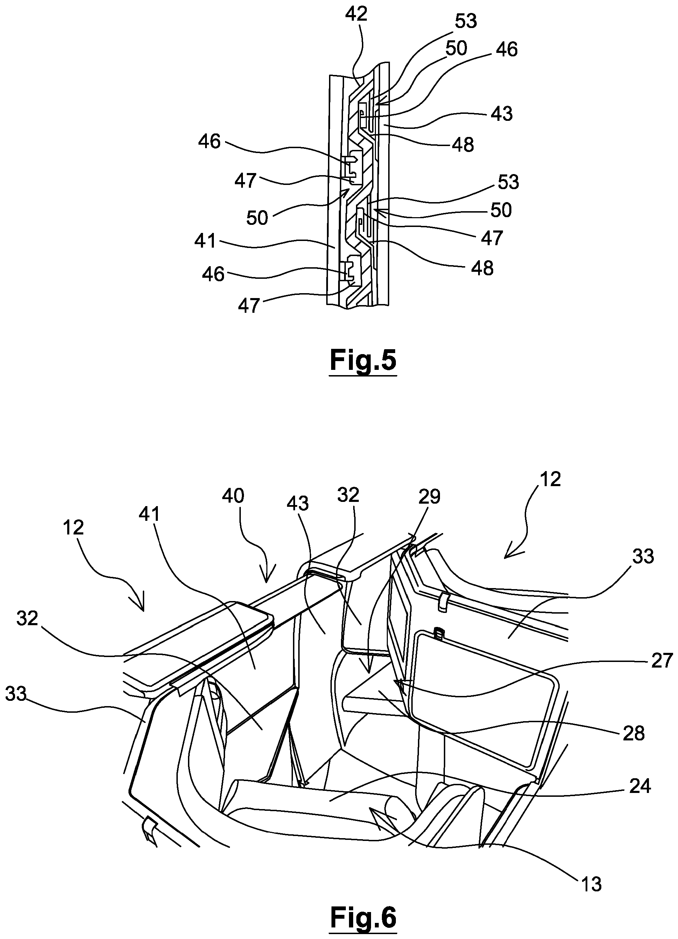

Comme cela a été précédemment défini et est particulièrement illustré par la figure 2, chaque unité de siège 12 comporte donc un siège 13. Selon une forme avantageuse de réalisation, le siège 13 comprend un dossier 24, notamment réglable en inclinaison et une assise 25, notamment potentiellement réglable en inclinaison. De plus, le siège 13 peut comprendre un repose-jambes 26, notamment réglable en inclinaison. De plus, l'unité de siège 12 peut comporter un repose-pieds 27, notamment visible en figure 6.

Selon une variante, le repose-pieds 27 peut consister en un coussin fixe 28, notamment agencé dans un logement 29 dédié à recevoir les pieds du passager. Préférentiellement, le coussin fixe 28 du repose-pieds 27 se situe dans le prolongement du siège 13 lorsque ce dernier se trouve en position « couchette ».

Alternativement, le repose-pieds 27 peut consister en un élément situé à l'extrémité du repose-jambes 26.

L'unité de siège 12 peut également comporter un meuble latéral 32, susceptible notamment de servir de tablette fixe et/ou de rangement de tablette repas.

L'unité de siège 12 peut également comporter une coque fixe 33 apte à assurer une séparation. Une telle coque fixe 33 permet donc de garantir l'intimité de chaque passager. De façon avantageuse, afin de remplir une telle fonction de garantie d'intimité, la coque fixe 33 s'étend autour du dossier 24 du siège 13 afin de créer un espace intérieur, en tout ou partie clos, dans lequel est agencé le siège 13.

Lorsque deux unités de sièges 12 sont disposées l'une derrière l'autre, avantageusement, les deux unités de sièges 12 sont agencées de sorte à définir un recouvrement vertical, au moins partiel, entre elles. Selon une variante de réalisation, le recouvrement vertical entre les deux unités de sièges 12 peut consister, tel que représenté, en un positionnement du logement 29 du repose-pieds 27 de l'unité de siège 12 « arrière » sous le meuble latéral 32 de l'unité de siège 12 « avant » correspondante.

De plus, l'unité de siège 12 peut comprendre un accoudoir 34. L' accoudoir 34 peut être escamotable de telle sorte qu'il est mobile entre une position « remontée » dans laquelle l'accoudoir 34 est apte à soutenir une partie du corps du passager, en particulier un bras du passager, et une position « stockée » dans laquelle l'accoudoir 34 est apte à être positionné au même niveau que l'assise 25 du siège 13, en particulier lorsque ce dernier est en position assise. Le passager pourra ainsi tirer profit de positions de confort en plaçant, par exemple, une partie de son corps, notamment une jambe, sur l'accoudoir 34 en position « stockée ».

En outre, l'unité de siège 12 peut comporter éventuellement un coussin fixe (non représenté). En particulier, le coussin fixe permet une maximisation du couchage. A cet effet, il est avantageusement destiné à être positionné dans un prolongement du siège 13, notamment un prolongement latéral, lorsque ce dernier est en position « couchette ».

Tel que visible notamment sur la figure 1, un passage transversal 37 est ménagé entre deux unités de sièges 12 consécutives d'une rangée 15a, respectivement les rangées 15a, 15b, 15c et 15d, à savoir une unité de siège 12 « avant » et une unité de siège 12 « arrière ». Plus spécifiquement selon l'exemple de réalisation présenté, le passage transversal 37 s'étend entre l'unité de siège 12 « arrière » et la coque fixe 33 de l'unité de siège 12 « avant ».

Le passage transversal 37 est agencé de sorte à permettre une circulation du passager du siège 13 vers le couloir de circulation 21, notamment lorsque le siège 13 est en position « couchette ».

Selon la présente invention, des moyens de fermeture 40, en particulier des moyens de fermeture 40 amovibles, sont disposés dans le passage transversal 37. Les des moyens de fermeture 40 sont aptes à assurer la fermeture du passage transversal 37. De tels moyens de fermeture 40 permettent ainsi de définir, notamment en coopération avec la coque fixe 33 de l'unité de sièges 12, un espace clos autour du siège 13.

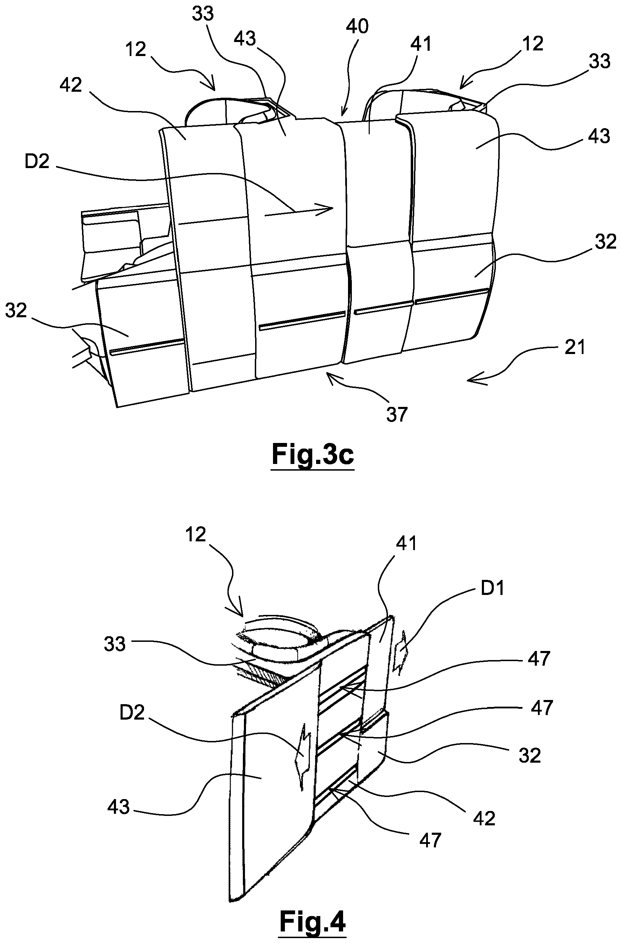

Lorsque les moyens de fermeture 40 sont déployés, tel que cela est illustré notamment sur les figures 3c et 6, le passage transversal 37 ménagé entre deux unités de sièges 12 consécutives de la rangée 15a, respectivement les rangées 15a, 15b, 15c, 15d, est clos par les moyens de fermeture 40, tels que par exemple des parois et/ou des rideaux.

En conséquence, le passager assis dans le siège 13 est séparé de tout passager et/ou personnel de bord marchant dans le couloir de circulation 21 par les moyens de fermeture 40 en coopération avec la coque fixe 33 s'étendant autour du siège 13. Le passager se retrouve ainsi assis dans une zone d'intimité définie par l'espace clos ainsi créé.

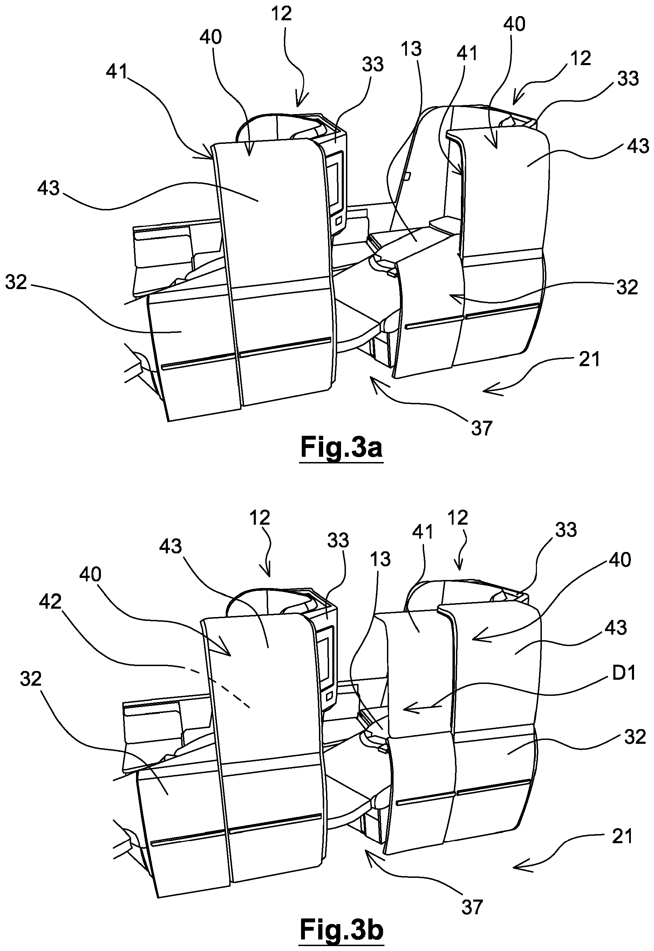

Dans les modes de réalisation présentés sur les figures 3a à 7c, les moyens de fermeture 40 comportent au moins une première paroi 41. En particulier, la première paroi 41 s'étend suivant un plan sensiblement vertical.

De plus, préférentiellement, la première paroi 41 est apte à coulisser, suivant une première direction D1, par rapport à l'unité de siège 12, en particulier par rapport à une paroi intermédiaire 42 de l'unité de siège 12, notamment la paroi intermédiaire 42 de l'unité de siège 12 « arrière ».

La première paroi 41 est ainsi mobile entre :
- une position « rangée », dans laquelle la première paroi 41 se superpose au moins partiellement avec la paroi intermédiaire 42 de l'unité de siège 12, notamment la paroi intermédiaire 42 de l'unité de siège 12 « arrière », suivant l'axe longitudinal X1 de la cabine d'avion 10, tel que présenté sur la figure 3a, et
- une position « déployée », dans laquelle la première paroi 41 obture tout ou partie du passage transversal 37 entre l'unité de siège 12 « avant » et l'unité de siège 12 « arrière », tel qu'illustré par la figure 3b.

En particulier, la première paroi 41 s'étend suivant un plan sensiblement vertical. Selon une alternative de la présente invention, les moyens de fermeture 40 comportent au moins une deuxième paroi 43.

De plus, préférentiellement, la deuxième paroi 43 est apte à coulisser suivant une deuxième direction D2 par rapport à l'unité de siège 12, en particulier par rapport à la paroi intermédiaire 42 de l'unité de siège 12, notamment la paroi intermédiaire 42 de l'unité de siège 12 « avant ».

La deuxième paroi 43 est ainsi mobile entre :
- une position « rangée », dans laquelle la deuxième paroi 43 se superpose au moins partiellement avec la paroi intermédiaire 42 l'unité de siège 12, notamment la paroi intermédiaire 42 de l'unité de siège 12 « avant», suivant l'axe longitudinal X1 de la cabine d'avion 10, tel que montré sur la figure 3b, et
- une position « déployée », dans laquelle la deuxième paroi 43 obture tout ou partie du passage transversal 37 entre l'unité de siège 12 « avant » et l'unité de siège 12 « arrière », tel qu'illustré sur la figure 3c.

Selon un exemple de réalisation, la deuxième direction D2 selon laquelle se déplace de la deuxième paroi 43 est opposée à la première direction D1 selon laquelle se déplace de la première paroi 41. La première direction D1 et la deuxième direction D2 sont, de préférence, parallèles à l'axe longitudinal X1 de la cabine d'avion 10.

Plus particulièrement, les parties du passage transversal 37 obturées par la première paroi 41 et la deuxième paroi 43 sont, avantageusement, complémentaires suivant l'axe longitudinal X1, de sorte que le passage transversal 37 est obturé suivant toute sa dimension longitudinale.

En particulier, selon une alternative de la présente invention, la première paroi 41 peut obturer également un espace situé au-dessus du meuble latéral 32 de l'unité de siège 12 « arrière ». De plus, la deuxième paroi 43 peut également obturer le reste du passage transversal 37 entre les deux unités de sièges 12.

Lorsque la première paroi 41 et la deuxième paroi 43 sont déplacées en position « déployée », la première paroi 41 et la deuxième paroi 43 comprennent des bords, de préférence, sensiblement jointifs. En variante, les bords de la première paroi 41 et de la deuxième paroi 43 pourront être légèrement espacés l'un par rapport à l'autre.

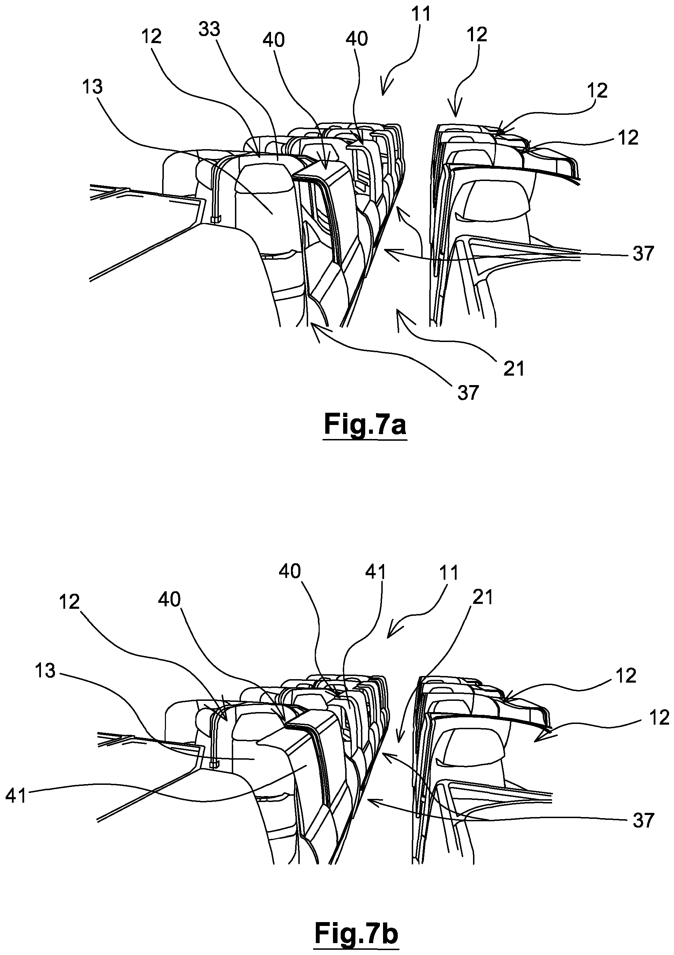

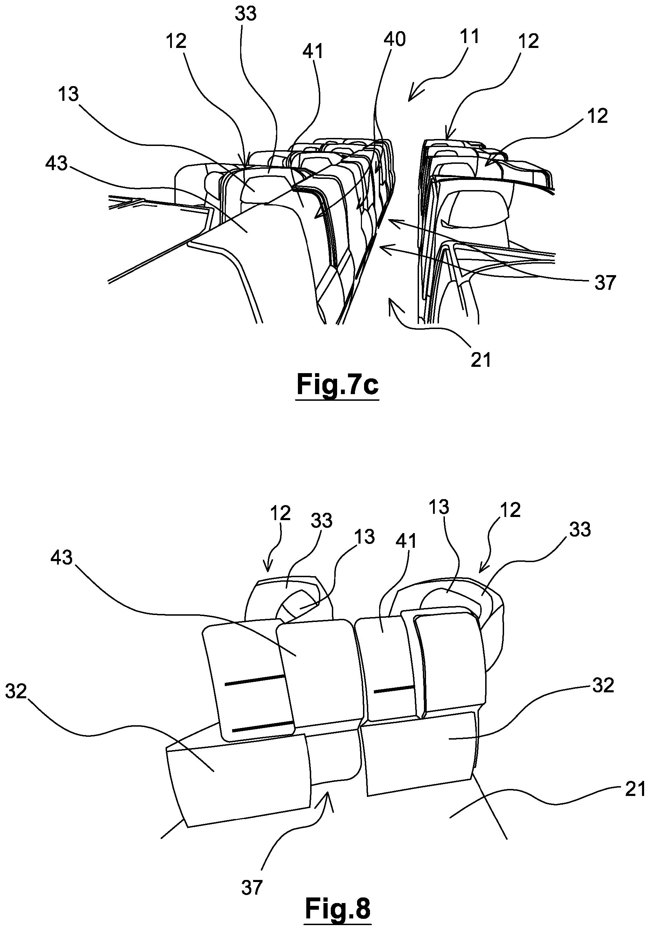

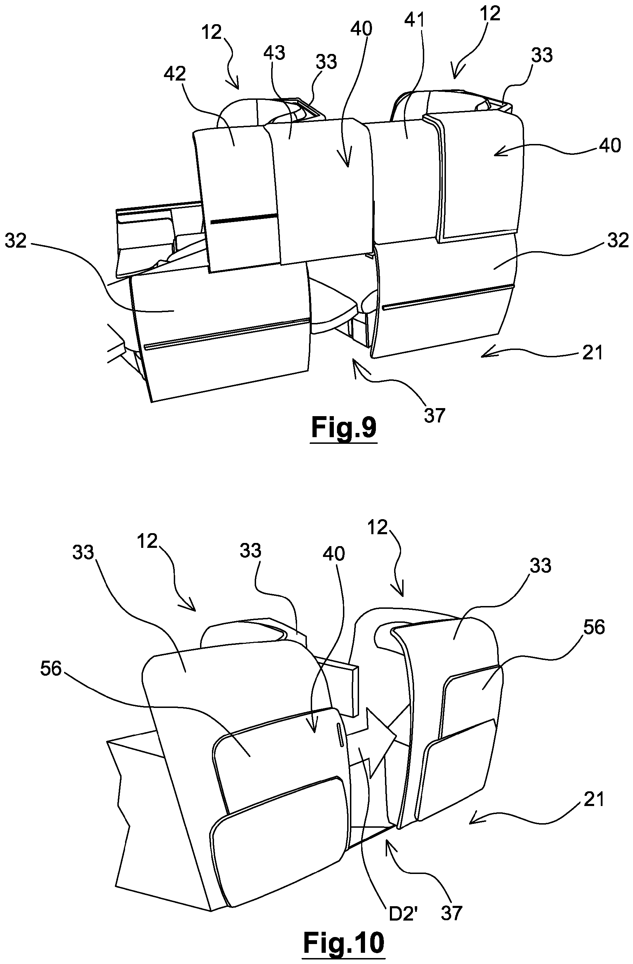

Dans le mode de réalisation des figures 3a à 3c et 7a à 7c, la première paroi 41 s'étend uniquement sur une partie haute de l'unité de siège 12. Dans un tel agencement, une portion d'une partie basse du passage transversal 37 est obturée par le meuble latéral 32. En complément, la deuxième paroi 43 s'étend sur une partie haute et une partie basse de l'unité de siège 12. En variante, la deuxième paroi 43 s'étend uniquement sur une partie haute, comme cela est illustré par la figure 9.

Selon une configuration alternative, l'unité de siège 12 est équipée d'une première paroi 41 et/ou d'une deuxième paroi 43 montées coulissantes par rapport à une paroi intermédiaire 42, avantageusement fixe par rapport à l'unité de siège 12.

Selon l'exemple de réalisation présenté sur les figures 4 et 5, la première paroi 41 et la deuxième paroi 43 sont situées de part et d'autre de la paroi intermédiaire 42. La première paroi 41 et la deuxième paroi 43 sont respectivement solidaires d'au moins une glissière 46 coopérant avec au moins un rail 47, en particulier fixé à la paroi intermédiaire 42. A cet effet, la première paroi 41, respectivement la deuxième paroi 43, pourra comporter une patte de fixation 48 établissant la liaison entre la première paroi 41, respectivement la deuxième paroi 43, et la glissière 46.

L'unité de siège 12 pourra, par exemple, comporter trois rails 47 situés respectivement en partie inférieure, en partie supérieure et dans une zone intermédiaire de la paroi intermédiaire 42.

En se référant à la figure 5, la paroi intermédiaire 42 présente, de préférence, une forme ondulée, chaque ondulation définissant un creux 50. Ainsi, deux creux 50 successifs sont ouverts suivant deux directions opposées. Dans une telle configuration, les rails 47 de l'une des parois parmi la première paroi 41 et la deuxième paroi 43 sont logés dans des creux 50 ouverts en direction du siège 13 et les rails 47 de l'autre des parois parmi la première paroi 41 et la deuxième paroi 43 sont logés dans des creux 50 ouverts en direction du couloir de circulation 21.

Dans l'exemple représenté, la première paroi 41 peut être située sur un côté interne, c'est-à-dire du côté du siège 13, et la deuxième paroi 43 est située sur un côté externe, c'est-à-dire du côté du couloir de circulation 21.

La structure telle définie précédemment pourra bien entendu être inversée, c'est-à-dire que la première paroi 41 pourra être située sur le côté externe et la deuxième paroi 43 pourra être située sur le côté interne.

Selon un exemple complémentaire de réalisation, un cache 53 est susceptible de s'étendre au-dessus du rail 47. Le cache 53 permet d'éviter les risques de pincement de doigts lors de la manipulation de la première paroi 41 et/ou de la deuxième paroi 43 par le passager.

A titre d'exemple, la paroi intermédiaire 42 peut être constituée par une portion de la coque fixe 33 ou être une paroi rapportée par rapport à la coque fixe 33 et susceptible d'être assemblée ou fixée à la coque fixe 33. La paroi intermédiaire 42 peut également être fixée sur le meuble latéral 32.

Dans le mode de réalisation de la figure 8, une partie inférieure de la deuxième paroi 43 est logée dans le meuble latéral 32 lorsque la deuxième paroi 43 est dans la position « rangée ».

En variante, la première paroi 41 et la deuxième paroi 43 peuvent être mobiles suivant un mouvement de rotation, notamment selon un axe sensiblement perpendiculaire à l'axe longitudinal X1 de la cabine d'avion 10 ou un mouvement combiné comportant au moins une translation et au moins une rotation.

L'avantage de disposer d'une première paroi 41 et d'une deuxième paroi 43 distinctes réside dans le niveau de probabilités que la première paroi 41 et/ou de la deuxième paroi 43 présente(nt) des dysfonctionnements simultanés est très faible, en sorte que le passager pourra toujours déplacer au moins une des première paroi 41 ou deuxième paroi 43 pour accéder au couloir de circulation 21, notamment en cas de situation de danger nécessitant d'évacuer l'avion.

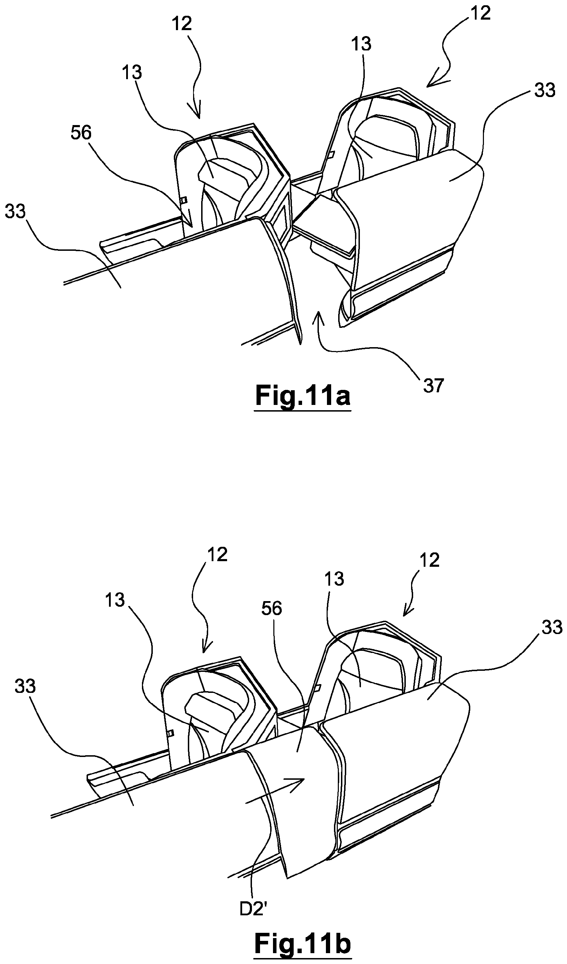

Dans le mode de réalisation des figures 10, 11a, et 11b, les moyens de fermeture 40 comportent une paroi unique 56 pour assurer la fermeture du passage 37 ménagé entre deux unités de sièges 12 consécutives d'une rangée d'unités de sièges 12.

Selon une première alternative, la paroi unique 56 est apte à coulisser entre une position « rangée » dans laquelle la paroi unique 56 se superpose au moins partiellement avec la coque fixe 33 de l'unité de siège 12 « avant », et une position « déployée » dans laquelle la paroi unique 56 ferme le passage transversal 37 entre l'unité de siège 12 « avant » et l'unité de siège 12 « arrière », tel que cela est montré sur les figures 10, 11a et 11b.

Selon une deuxième alternative non représenté, la paroi unique 56 est apte à coulisser entre une position « rangée » dans laquelle la paroi unique 56 se superpose au moins partiellement avec la coque fixe 33 de l'unité de siège 12 « arrière », et une position « déployée » dans laquelle la paroi unique 56 ferme le passage transversal 37 entre l'unité de siège 12 « avant » et l'unité de siège 12 « arrière ».

La hauteur de la paroi unique 56 peut être adaptée en fonction des besoins. Ainsi, dans le mode de réalisation de la figure 10, la hauteur de la paroi unique 56 est inférieure à celle de la coque fixe33, tandis que, dans le mode de réalisation des figures 11a et 11b, la hauteur de la paroi unique 56 est sensiblement égale à celle de la coque fixe 33.

Selon les exemples présentés, la paroi unique 56 se déplace suivant une direction de translation D2', avantageusement parallèle à l'axe longitudinal X1 de la cabine d'avion 10, correspondant à la direction longitudinale de l'avion.

En variante, la paroi unique 56 peut être mobile suivant un mouvement de rotation, notamment selon un axe sensiblement horizontal, un axe sensiblement vertical, ou un axe formant un angle avec l'axe longitudinal X1, ou un mouvement combiné comportant au moins une translation et au moins une rotation.

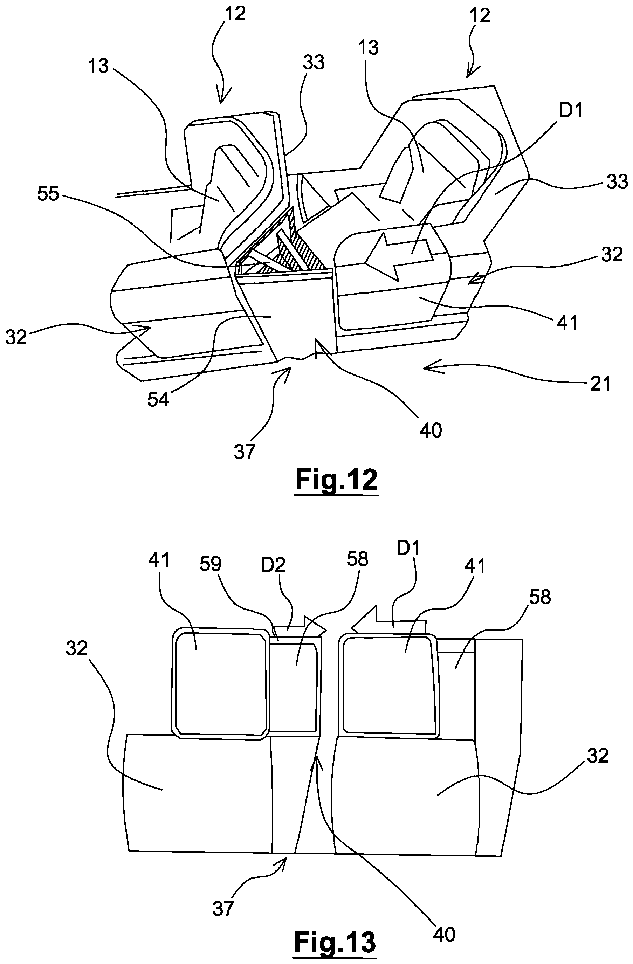

Dans le mode de réalisation de la figure 12, la première paroi 41, en particulier coulissante, est apte à obturer l'espace situé au-dessus du meuble latéral 32. Dans cet exemple de réalisation, la deuxième paroi 43 est remplacée par un rideau 54 occultant monté sur un support 55.

Avantageusement, le support 55 est articulé et mobile entre
- une position « rangée », dans laquelle le rideau 54 est situé à l'intérieur de l'unité de siège 12 « avant », par exemple à l'intérieur de la coque fixe 33 de l'unité de siège 12 « avant », et
- une position « déployée », dans laquelle le rideau 54 obture tout ou partie du passage transversal 37, tel que cela est montré sur la figure 12.

Afin de permettre le passage de la position « rangée », à la position « déployée », le support 55 pourra être mobile en translation et/ou en rotation par rapport à l'unité de siège 12 « avant ».

Dans le mode de réalisation de la figure 13, la première paroi 41, en particulier coulissante, est apte à obturer l'espace au-dessus du meuble latéral 32. Dans cet exemple de réalisation, la deuxième paroi 43 est remplacée par un rideau 58 monté sur un cadre 59.

Avantageusement, le cadre 59 est coulissant, suivant la direction D2, entre :
- une position « rangée », dans laquelle le rideau 54 est situé à l'intérieur de l'unité de siège 12 « avant », par exemple à l'intérieur de la coque fixe 33 de l'unité de siège 12 « avant », et
- une position « déployée », dans laquelle le rideau 54 obture tout ou partie du passage transversal 37.

A cet effet, le cadre 59 pourra comporter une forme en U avec deux bras aptes à coulisser à l'intérieur de l'unité de siège 12 « avant », en particulier à l'intérieur de la paroi intermédiaire 42.

Selon une alternative de réalisation des exemples particuliers de réalisation des figures 12 et 13, en position « déployée », le rideau 54 obture tout ou partie de l'espace entre la paroi intermédiaire 42 de l'unité de siège 12 « avant » et la première paroi 31.

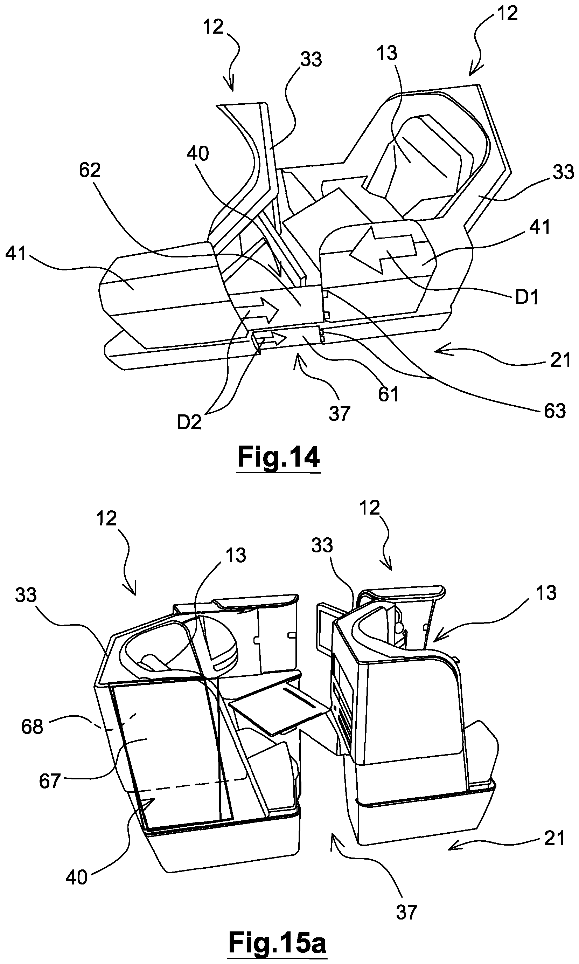

Dans le mode de réalisation de la figure 14, la première paroi 41, en particulier coulissante, est apte à obturer l'espace situé au-dessus du meuble latéral 32. Dans cet exemple de réalisation, la deuxième paroi 43 est remplacée par au moins un premier rideau 61, en particulier un premier rideau 61 et un deuxième rideau 62.

Avantageusement, le premier rideau 61 et/ou le deuxième rideau 62 est (sont) enroulable(s) et est (sont) implanté(s) dans l'unité de siège 12 « avant ».

Le premier rideau 61 permet, lorsqu'il est déroulé suivant la direction D2, d'obturer au moins une partie du passage transversal 37, notamment une partie inférieure du passage transversal 37. En complément ou alternativement, le deuxième rideau 52 permet, lorsqu'il est déroulé suivant la direction D2, d'obturer au moins une partie du passage transversal 37 notamment une partie supérieure du passage transversal 37.

Le maintien dans l'état « déroulé » du premier rideau 61 et/ou du deuxième rideau 62 pourra être obtenu au moyen d'un système d'accrochage 63 de l'extrémité libre du premier rideau 61 et/ou du deuxième rideau 62 sur une paroi de l'unité de siège 12 « arrière ». Le système d'accrochage 63 pourra être un système à crochets ou à aimants.

En variante, le premier rideau 61 et/ou le deuxième rideau 62 pourront être réalisé(s) dans un matériau extensible.

Selon une autre variante de réalisation, le premier rideau 61 peut être implanté dans l'unité de siège 12 « arrière ». De même, le deuxième rideau 62 peut être implanté dans l'unité de siège 12 « arrière ». De façon alternative, le premier rideau 61 et le deuxième rideau 62 sont implantés dans des unités de siège 12 distinctes.

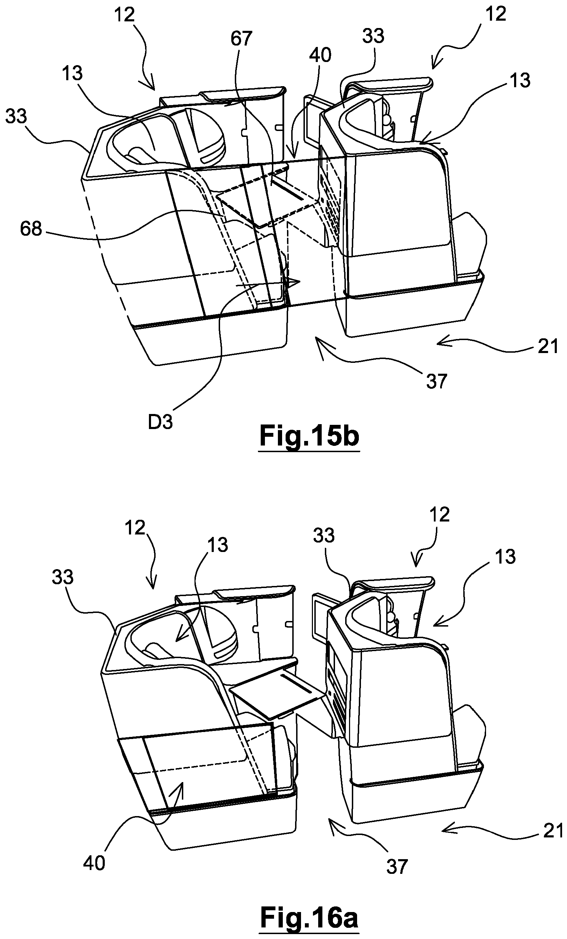

Dans le mode de réalisation des figures 15a et 15b, les moyens de fermeture 40 comportent au moins deux parois 67, 68, avantageusement solidaires, mobiles l'une par rapport à l'autre. En d'autres termes, les parois 67, 68 sont en liaison l'une avec l'autre selon au moins un degré de liberté.

Les parois 67, 68 sont
- agencées, dans une position « rangée », dans l'unité de siège 12 « avant », notamment dans la coque fixe 33 de l'unité de siège 12 « avant »,
- déployées, dans une position « déployée », selon une même direction de déploiement D3 pour obturer le passage transversal 37 entre deux unités de sièges 12,
tel que présenté sur les figure 15a et 15b.

Dans le mode de réalisation des figures 16a à 16c, les moyens de fermeture 40 comportent au moins une première paroi 71 et une deuxième paroi 72, avantageusement solidaires, mobiles l'une par rapport à l'autre. En d'autres termes, la première paroi 71 et la deuxième paroi 72 sont en liaison l'une avec l'autre selon au moins un degré de liberté.

La première paroi 71 et la deuxième paroi 72 sont
- agencées, dans une position « rangée », dans l'unité de siège 12 « avant », notamment dans la coque fixe 33 de l'unité de siège 12 « avant »,
- déployées dans une position « déployée », selon deux directions de déploiement distinctes.

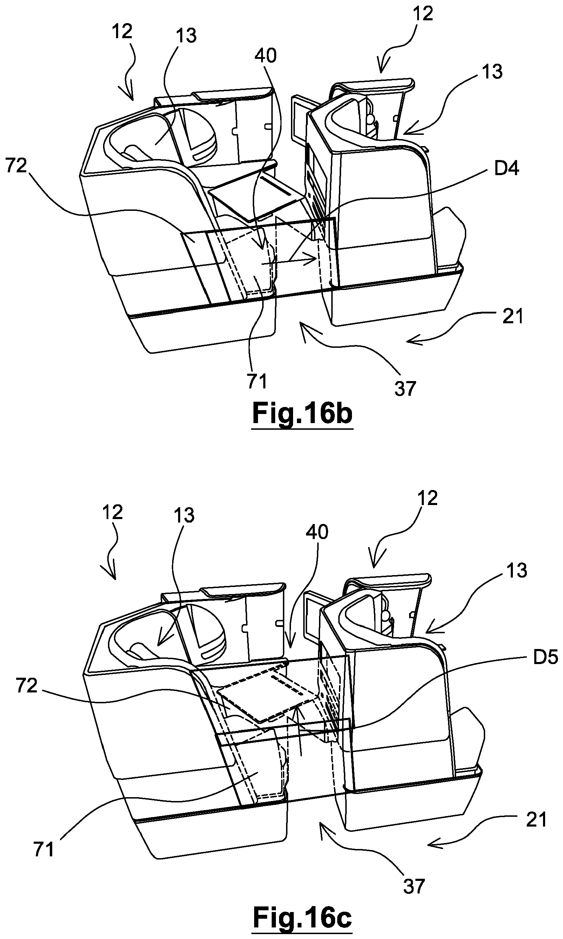

Ainsi, la première paroi 71 peut être déplacée avec la deuxième paroi 72 suivant une première direction de déploiement D4, notamment parallèle à l'axe longitudinal X1 de la cabine d'avion 10 afin d'obturer au moins une partie du passage transversal 37, notamment une partie inférieure du passage transversal 37, tel que présenté sur la figure 16b. A titre d'exemple, la première paroi 71 peut être déplacée selon un mouvement de translation horizontal.

La deuxième paroi 72 est susceptible d'être déplacée par rapport à la première paroi 71 suivant une deuxième direction de déploiement D5, notamment une direction verticale, afin d'obturer au moins une partie passage transversal 37, notamment une partie supérieure du passage transversal 37, tel que cela est illustré par la figure 16c. A titre d'exemple, la deuxième paroi 72 peut être déplacée selon un mouvement de translation vertical.

Il est à noter que la présente invention n'est pas limitée à un agencement de cabine dans lequel chaque siège 13 est orienté vers le couloir de circulation 21 de la cabine d'avion 10. Elle englobe également tout agencement de cabine d'avion 10 dans lequel il existe un passage transversal 37 disposé entre deux unités de sièges 12 agencées l'une derrière l'autre selon un axe longitudinal X1 de la cabine d'avion 10, permettant un accès direct à un couloir de circulation 21.

Elle est donc également applicable à des arrangements de sièges dans lesquels les sièges sont tournés dans une direction opposée à celle du couloir de circulation 21 (configuration dite de type "Herringbone" en anglais).

L'invention pourra également être mise en œuvre avec des sièges installés dans d'autres moyens de transport, comme par exemple des sièges de bus, de trains, ou de bateaux.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Arrangement de sièges (11), notamment destiné à être installé dans une cabine d'avion (10), comprenant:
- au moins une unité de siège (12) "avant" et au moins une unité de siège (12) "arrière" situées l'une derrière l'autre selon un axe longitudinal (X1) de la cabine d'avion (10) et comportant respectivement au moins un siège (13) apte à passer d'une position "assise" à une position "couchette",
- un passage transversal (37) disposé entre l'unité de siège (12) "avant" et l'unité de siège (12) "arrière" pour permettre un accès à un couloir de circulation (21),
l'arrangement de sièges (11) comprenant des moyens de fermeture (40) mobiles aptes à obturer au moins partiellement le passage transversal (37) lorsque les moyens de fermeture (40) sont déployés,
- les moyens de fermeture (40) comportant une première paroi (41) et une deuxième paroi (43) montées mobiles par rapport à l'unité de siège (12),
- ladite première paroi (41) étant apte à coulisser suivant une première direction de déploiement (D1) entre
• une position « rangée », et
• une position « déployée », dans laquelle la première paroi (41) obture au moins une partie du passage transversal (37) entre l'unité de siège (12) « avant » et l'unité de siège (12) « arrière »,
- ladite deuxième paroi (43) étant apte à coulisser suivant une deuxième direction de déploiement (D2) entre
• une position « rangée », et
• une position « déployée », dans laquelle la deuxième paroi (43) obture au moins une partie du passage transversal (37) entre l'unité de siège (12) « avant » et l'unité de siège (12) « arrière »,
- la première paroi (41) et la deuxième paroi (43) étant situées de part et d'autre d'une paroi intermédiaire (42), notamment constituée par une portion d'une coque fixe (33) de l'unité de siège (12),
**caractérisé en ce que** la paroi intermédiaire (42) présente une forme ondulée définissant des creux (50), deux creux (50) successifs étant ouverts suivant deux directions opposées, des rails (47) d'une des parois parmi la première ou la deuxième parois (41, 43) étant logés dans des creux (50) ouverts en direction du siège (13) et des rails (47) de l'autre des parois parmi la première et la deuxième paroi (41, 43) étant logés dans des creux (50) ouverts dans une direction opposée au siège (13).

2. Arrangement de sièges (11) selon la revendication 1, **caractérisé en ce que** le siège (13) est tourné vers un couloir de circulation (21) de la cabine d'avion (10).

3. Arrangement de sièges (11) selon la revendication 1 ou 2, **caractérisé en ce que** les moyens de fermeture (40) comportent au moins une paroi coulissante (41, 43), notamment rigide ou flexible.

4. Arrangement de sièges (11) selon la revendication 1, **caractérisé en ce que** la deuxième direction de déploiement (D2) de la deuxième paroi (43) est opposée à la première direction de déploiement (D1) de la première paroi (41).

5. Arrangement de sièges (11) selon la revendication 1, **caractérisé en ce que** la première paroi (41) est solidaire d'au moins une glissière (46) coopérant avec un rail (47) fixé sur la paroi intermédiaire (42) et/ou **en ce que** la deuxième paroi (43) est solidaire d'au moins une glissière (46) coopérant avec un rail (47) fixé sur la paroi intermédiaire (42).

6. Arrangement de sièges (11) selon l'une quelconque des revendications 1 à 5, **caractérisé en ce qu'**un cache (53) s'étend au-dessus d'au moins un rail (47) correspondant afin d'éviter des risques de pincement de doigts lors d'une manipulation de la première paroi (41) ou de la deuxième paroi (43).

7. Arrangement de sièges (11) selon l'une quelconque des revendications 1 à 6, **caractérisé en ce qu'**une partie inférieure de la première paroi (41) et/ou de la deuxième paroi (43) est logée dans un meuble latéral (32) de l'unité de siège (12) correspondante respectivement lorsque la première paroi (41) et/ou la deuxième paroi (43) est dans la position rangée.

8. Arrangement de sièges (11) selon la revendication 1, **caractérisé en ce que** la première paroi (41) et la deuxième paroi (43) sont mobiles suivant un mouvement de translation ou de rotation, ou un mouvement combiné comportant au moins une translation et au moins une rotation.

9. Arrangement de sièges (11) selon l'une quelconque des revendications 1 à 8, **caractérisé en ce que** les moyens de fermeture (40) comportent au moins un rideau occultant (54, 58, 61, 62).

10. Arrangement de sièges (11) selon la revendication 9, **caractérisé en ce que** le rideau (54) est monté sur un support articulé (55) mobile entre
• une position « rangée », dans laquelle le rideau (54) est situé à l'intérieur de l'unité de siège (12) « avant », notamment à l'intérieur de la coque fixe (33) de l'unité de siège (12) « avant », et
• une position « déployée », dans laquelle le rideau (54) obture au moins une partie du passage transversal (37).

11. Arrangement de sièges (11) selon la revendication 10, **caractérisé en ce que** le support (55) est mobile en translation et/ou en rotation par rapport à l'unité de siège (12) « avant » pour passer de la position « rangée » à la position « déployée ».

12. Arrangement de sièges (11) selon la revendication 9, **caractérisé en ce que** le rideau (58) est monté sur un cadre (59) coulissant entre
• une position « rangée », dans laquelle le rideau (58) est situé à l'intérieur de l'unité de siège (12) « avant », notamment à l'intérieur de la coque fixe (33) de l'unité de siège (12) « avant », et
• une position « déployée », dans laquelle le rideau (58) obture au moins une partie du passage transversal (37).

13. Arrangement de sièges (11) selon la revendication 9, **caractérisé en ce que** les moyens de fermeture (40) comportent un premier rideau (61) et/ou un deuxième rideau (62), notamment enroulables et en particulier implantés dans l'unité de siège (12) « avant », le premier rideau (61) permettant, lorsqu'il est déroulé, d'obturer au moins une partie du passage transversal (37), notamment une partie inférieure du passage transversal (37), et/ou le deuxième rideau (62) permettant d'obturer, lorsqu'il est déroulé, au moins une partie du passage transversal (37), notamment une partie supérieure du passage transversal (37).

14. Arrangement de sièges (11) selon l'une quelconque des revendications 1 à 3, **caractérisé en ce que** les moyens de fermeture (40) comportent au moins deux parois (67, 68) mobiles l'une par rapport à l'autre selon au moins un degré de liberté et susceptibles d'être déployées selon une même direction de déploiement ou selon deux directions distinctes.

## Patentansprüche

1. Anordnung von Sitzen (11), insbesondere zum Einbau in eine Flugzeugkabine (10), umfassend:
- mindestens eine "vordere" Sitzeinheit (12) und mindestens eine "hintere" Sitzeinheit (12), welche entlang einer Längsachse (X1) der Flugzeugkabine (10) hintereinander angeordnet sind, und jeweils mindestens einem Sitz (13) umfassen, der von einer "Sitzposition" zu einer "Liegeposition" übergehen kann,
- einen Querdurchgang (37) zwischen der "vorderen" Sitzeinheit (12) und der "hinteren" Sitzeinheit (12), um den Zugang zu einem Gang (21) zu ermöglichen,
wobei die Anordnung von Sitzen (11) bewegliche Schließmittel (40) umfasst, die den Querdurchgang (37) zumindest teilweise schließen können, wenn die Schließmittel (40) ausgefahrt sind,
- wobei die Schließmittel (40) eine erste Wand (41) und eine zweite Wand (43) umfasst, die relativ zur Sitzeinheit (12) beweglich montiert sind,
- wobei die erste Wand (41) in einer ersten Ausfahrrichtung (D1) zwischen
• einer "verstauten" Position und
• einer "ausgefahrenen" Position, in der die erste Wand (41) zumindest einen Teil des Querdurchgangs (37) zwischen der "vorderen" Sitzeinheit (12) und der "hinteren" Sitzeinheit (12) verschließt, gleiten kann,
- wobei die zweite Wand (43) in einer zweiten Ausfahrrichtung (D2) zwischen
• einer "verstauten" Position und
• einer "ausgefahrenen" Position, in der die zweite Wand (43) zumindest einen Teil des Querdurchgangs (37) zwischen der "vorderen" Sitzeinheit (12) und der "hinteren" Sitzeinheit (12) verschließt, gleiten kann,
- wobei sich die erste Wand (41) und die zweite Wand (43) beiderseits einer insbesondere durch einen Abschnitt einer festen Schale (33) der Sitzeinheit (12) gebildeten Zwischenwand (42) befinden,
**dadurch gekennzeichnet, dass** die Zwischenwand (42) eine gewellte Form aufweist, die Vertiefungen (50) definiert, wobei zwei aufeinanderfolgende Vertiefungen (50) in zwei entgegengesetzten Richtungen offen sind, wobei Schienen (47) einer der Wände von der ersten oder der zweiten Wand (41, 43) in Vertiefungen (50) gelagert sind, die in Richtung des Sitzes (13) offen sind, und wobei Schienen (47) der anderen der Wände von der ersten und der zweiten Wand (41, 43) in Vertiefungen (50) gelagert sind, die in einer entgegengesetzten Richtung zum Sitz (13) offen sind.

2. Anordnung von Sitzen (11) nach Anspruch 1, **dadurch gekennzeichnet, dass** der Sitz (13) einem Gang (21) der Flugzeugkabine (10) zugewandt ist.

3. Anordnung von Sitzen (11) nach Anspruch 1 oder 2, **dadurch gekennzeichnet, dass** die Schließmittel (40) mindestens eine Gleitwand (41, 43) umfassen, die insbesondere starr oder flexibel ist.

4. Anordnung von Sitzen (11) nach Anspruch 1, **dadurch gekennzeichnet, dass** die zweite Ausfahrrichtung (D2) der zweiten Wand (43) entgegengesetzt zur ersten Ausfahrrichtung (D1) der ersten Wand (41) ist.

5. Anordnung von Sitzen (11) nach Anspruch 1, **dadurch gekennzeichnet, dass** die erste Wand (41) einstückig mit mindestens einem Schlitten (46) ist, der mit einer an der Zwischenwand (42) befestigten Schiene (47) zusammenwirkt und/oder dass die zweite Wand (43) einstückig mit mindestens einem Schlitten (46) ist, der mit einer an der Zwischenwand (42) befestigten Schiene (47) zusammenwirkt.

6. Anordnung von Sitzen (11) nach einem der Ansprüche 1 bis 5, **dadurch gekennzeichnet, dass** sich eine Abdeckung (53) über mindestens eine entsprechende Schiene (47) erstreckt, um ein Einklemmen der Finger bei der Handhabung der ersten Wand (41) oder der zweiten Wand (43).

7. Anordnung von Sitzen (11) nach einem der Ansprüche 1 bis 6, **dadurch gekennzeichnet, dass** ein unterer Teil der ersten Wand (41) und/oder der zweiten Wand (43) in einem Seitenschrank (32) der jeweils entsprechenden Sitzeinheit (12), wenn sich die erste Wand (41) und/oder die zweite Wand (43) in der verstauten Position befinden.

8. Anordnung von Sitzen (11) nach Anspruch 1, **dadurch gekennzeichnet, dass** die erste Wand (41) und die zweite Wand (43) in einer translatorischen oder rotatorischen Bewegung oder einer kombinierten Bewegung aus mindestens einer Translation und mindestens einer Umdrehung bewegbar sind.

9. Anordnung von Sitzen (11) nach einem der Ansprüche 1 bis 8, **dadurch gekennzeichnet, dass** die Schließmittel (40) mindestens einen Privatvorhang (54, 58, 61, 62) umfassen.

10. Anordnung von Sitzen (11) nach Anspruch 9, **dadurch gekennzeichnet, dass** der Vorhang (54) zwischen
• einer "verstauten" Position, bei der sich der Vorhang (54) innerhalb der "vorderen" Sitzeinheit (12), insbesondere innerhalb der festen Schale (33) der "vorderen" Sitzeinheit (12), befindet, und
• einer "ausgefahrenen" Position, in der der Vorhang (54) zumindest einen Teil des Querdurchgangs (37) verschließt, an einem gelenkigen Träger (55) montiert ist.

11. Anordnung von Sitzen (11) nach Anspruch 10, **dadurch gekennzeichnet, dass** der Träger (55) bezüglich der "vorderen" Sitzeinheit (12) translatorisch und/oder rotatorisch bewegbar ist, um von der "verstauten" Position in die "ausgefahrenen" Position umzugehen.

12. Anordnung von Sitzen (11) nach Anspruch 9, **dadurch gekennzeichnet, dass** der Vorhang (58) an einem Rahmen (59) befestigt ist, welcher zwischen
• einer "verstauten" Position, in der sich der Vorhang (58) innerhalb der "vorderen" Sitzeinheit (12), insbesondere innerhalb der festen Schale (33) der "vorderen" Sitzeinheit (12), befindet, und
• einer "ausgefahrenen" Position, in der der Vorhang (58) zumindest einen Teil des Querdurchgangs (37) verschließt, gleiten kann.

13. Anordnung von Sitzen (11) nach Anspruch 9, **dadurch gekennzeichnet, dass** die Schließmittel (40) einen ersten Vorhang (61) und/oder einen zweiten Vorhang (62) umfassen, welche insbesondere aufrollbar sind, und insbesondere in der "vorderen" Sitzeinheit (12) eingebaut sind, wobei der erste Vorhang (61) im abgerollten Zustand das Schließen zumindest eines Teils des Querdurchgangs (37), insbesondere eines unteren Teils des Querdurchgangs (37), ermöglicht und/oder der zweite Vorhang (62) im abgerollten Zustand das Schließen zumindest eines Teils des Querdurchgangs (37), insbesondere eines oberen Teils des Querdurchgangs (37), ermöglicht.

14. Anordnung von Sitzen (11) nach einem der Ansprüche 1 bis 3, **dadurch gekennzeichnet, dass** die Schließmittel (40) mindestens zwei Wände (67, 68) umfassen, welche in mindestens einen Freiheitsgrad relativ zueinander bewegbar sind und in die gleiche Ausfahrrichtung oder in zwei verschiedene Richtungen ausgefahren werden.

## Claims

1. An arrangement of seats (11), in particular intended to be installed in an aircraft cabin (10), comprising:
- at least one "front" seat unit (12) and at least one "rear" seat unit (12) located behind one another along a longitudinal axis (X1) of the aircraft cabin (10) and comprising respectively at least one seat (13) capable of passing from a "seating" position to a "lying" position,
- a transverse passage (37) between the "front" seat unit (12) and the "rear" seat unit (12) to allow access to an aisle (21),
the arrangement of seats (11) comprising movable closing means (40) capable of at least partially closing the transverse passage (37) when the closing means (40) are deployed,
- the closing means (40) comprising a first wall (41) and a second wall (43) mounted so as to be movable relative to the seat unit (12),
- said first wall (41) being able to slide in a first direction of deployment (D1) between
• a "stowed" position, and
• an "deployed" position, in which the first wall (41) closes at least part of the transverse passage (37) between the "front" seat unit (12) and the "rear" seat unit (12),
- said second wall (43) being able to slide in a second direction of deployment (D2) between
• a "stowed" position, and
• an "deployed" position, in which the second wall (43) closes at least part of the transverse passage (37) between the "front" seat unit (12) and the "rear" seat unit (12),
- the first wall (41) and the second wall (43) being located on either side of an intermediate wall (42), in particular formed by a portion of a fixed shell (33) of the seat unit (12),
**characterized in that** the intermediate wall (42) has a corrugated shape defining hollows (50), two successive hollows (50) being open in two opposite directions, rails (47) of one of the walls among the first or the second walls (41, 43) being housed in hollows (50) open towards the seat (13) and rails (47) of the other of the walls among the first and the second walls (41, 43) being housed in hollows (50) open in a direction opposite to the seat (13).

2. The arrangement of seats (11) according to claim 1, **characterized in that** the seat (13) is oriented towards an aisle (21) of the aircraft cabin (10).

3. The arrangement of seats (11) according to claim 1 or 2, **characterized in that** the closing means (40) comprise at least one sliding wall (41, 43), which is in particular rigid or flexible.

4. The arrangement of seats (11) according to claim 1, **characterized in that** the second direction of deployment (D2) of the second wall (43) is opposite to the first direction of deployment (D1) of the first wall (41).

5. The arrangement of seats (11) according to claim 1, **characterized in that** the first wall (41) is linked to at least one slide (46) cooperating with a rail (47) fixed to the intermediate wall (42) and/or **in that** the second wall (43) is linked to at least one slide (46) cooperating with a rail (47) fixed to the intermediate wall (42).

6. The arrangement of seats (11) according to any one of the claims 1 to 5, **characterized in that** a cover (53) extends above at least one corresponding rail (47) in order to prevent fingers from being caught when handling the first wall (41) or the second wall (43).

7. The arrangement of seats (11) according to any one of the claims 1 to 6, **characterized in that** a lower part of the first wall (41) and/or of the second wall (43) is housed in a side cabinet (32) of the corresponding seat unit (12) respectively when the first wall (41) and/or the second wall (43) is in the stowed position.

8. The arrangement of seats (11) according to claim 1, **characterized in that** the first wall (41) and the second wall (43) are movable in a translational or rotational movement, or a combined movement comprising at least one translation and at least one rotation.

9. The arrangement of seats (11) according to any one of the claims 1 to 8, **characterized in that** the closing means (40) comprise at least one privacy curtain (54, 58, 61, 62).

10. The arrangement of seats (11) according to claim 9, **characterized in that** the curtain (54) is mounted on an articulated support (55) movable between
• a "stowed" position, in which the curtain (54) is located inside the "front" seat unit (12), in particular inside the fixed shell (33) of the "front" seat unit (12), and
• a "deployed" position, in which the curtain (54) closes at least part of the transverse passage (37).

11. The arrangement of seats (11) according to claim 10, **characterized in that** the support (55) is movable in translation and/or in rotation with respect to the "front" seat unit (12) so as to move from the "stowed" position to the "deployed" position.

12. The arrangement of seats (11) according to claim 9, **characterized in that** the curtain (58) is mounted on a frame (59) sliding between
• a "stowed" position, in which the curtain (58) is located inside the "front" seat unit (12), in particular inside the fixed shell (33) of the "front" seat unit (12), and
• a "deployed" position, in which the curtain (58) closes at least part of the transverse passage (37).

13. The arrangement of seats (11) according to claim 9, **characterized in that** the closing means (40) comprise a first curtain (61) and/or a second curtain (62), which are in particular rollable and in particular installed in the "front" seat unit (12), the first curtain (61) making it possible to close, when unrolled, at least part of the transverse passage (37), in particular a lower part of the transverse passage (37), and/or the second curtain (62) making it possible to close, when unrolled, at least part of the transverse passage (37), in particular an upper part of the transverse passage (37).

14. The arrangement of seats (11) according to any one of the claims 1 to 3, **characterized in that** the closing means (40) comprise at least two walls (67, 68), which are movable relative to each other in at least one degree of freedom and can be deployed in the same direction of deployment or in two distinct directions.
